# EUROPÄISCHE PATENTANMELDUNG

(11) **EP 2 380 861 A2**
(43) Veröffentlichungstag der Anmeldung: **26.10.2011**
(21) Anmeldenummer: 11002618.4
(22) Anmeldetag: 30.03.2011
(51) Int. Cl.: C04B 28/02, C04B 28/14, C04B 28/04, C04B 41/50

(54) **Werktrockenmörtel**

(30) Priorität: 20.04.2010 CZ 20100305
(71) Anmelder: Terzian, Sergej, 28601 Cáslav (CZ); Sarkisjan, Aram Artasesovic, 58001 Havlickuv Brod (CZ)
(72) Erfinder: Terzian, Sergej, 28601 Cáslav (CZ); Sarkisjan, Aram Artasesovic, 58001 Havlickuv Brod (CZ)
(74) Vertreter: Markes, Libor

(57) **Zusammenfassung**

Ein, Zement, Kalk, Gips und expandierte Mineralstoffe enthaltender Werktrockenmörtel ist durch 26 bis 32 % Massenanteil Zement, 26 bis 32 % Massenanteil Gips, 9 bis 13 % Massenanteil Kalk, 26 bis 32 % Massenanteil expandierten Vermiculit und 1 bis 3 % Massenanteil Polypropylenfaser gebildet.

## Beschreibung

### Gebiet der Technik

Die Erfindung betrifft einen, Zement, Kalk, Gips und expandierte Mineralstoffe enthaltenden Werktrockenmörtel, der zur Erzeugung von Wärmedämm-Verbundsystemen und Akustikputzen bestimmt ist.

### Bisheriger Stand der Technik

Beim Bau von Gebäuden werden in Einklang mit den gültigen Normen und Empfehlungen Baustoffe benutzt, die dem Wärmedurchgang großen Widerstand leisten, wie Bauplatten aus Keramik oder Porenbeton. Zur nachträglichen Wärmedämmung der bestehenden Gebäude werden verschiedene Sanierungssysteme verwendet, vor allem auf der Basis von Mineralwolle oder expandiertem Polystyrol. Nur selten werden spezielle Mörtel als Mittel zur Reduzierung der Wärmeverluste verwendet. Die bekannten Mörtel dieser Art enthalten expandierten Perlit als Element der Wärmedämmung. Die bekannten zur Wärmedämmung dienenden Mörtel haben zum Nachteil, dass sie undurchlässig sind und sich schwierig in einer dickeren Schicht auftragen lassen.

In der Patentschrift CS 195705, die eine Analogie zu der US-Prioritätsanmeldung Nr. 474100 darstellt, wird die Zusammensetzung eines Baustoffs beschrieben, aus dem―nachdem er mit Wasser gemischt worden ist - Bauplatten oder andere Bauelemente mit guten Wärmedämmeigenschaften abgegossen werden. Diese Baumasse enthält 15 bis 40 % Vol. Gipsstein, 9 bis 20 % Vol. expandierten Mineralstoff, 15 bis 40 % Vol. Zement und 1 bis 2 % Vol. Polypropylen-, Glas- oder Sisaihanffasern. Der Baustoff taugt nicht zum Verputzen.

Der Erfindung liegt die Aufgabe zu Grunde, einen Werktrockenmörtel zu entwerfen, der die bekannten Mörtel dieser Art in Wärmedämm- und bautechnischen Eigenschaften übertrifft.

### Darstellung der Erfindung

Diese Aufgabe wird durch einen, Zement, Kalk, Gips und expandierte Mineralstoffe enthaltenden Werktrockenmörtel gelöst, der durch 26 bis 32 % Massenanteil Zement, 26 bis 32 % Massenanteil Gips, 9 bis 13 % Massenanteil Kalk, 26 bis 32 % Massenanteil expandierten Vermiculit und 1 bis 3 % Massenanteil Polypropylenfaser gebildet ist.

In einer vorteilhaften Ausführung hat das Gemisch die folgende Zusammensetzung: 29 % Massenanteil Portlandzement, 29 % Massenanteil Stuckgips, 11 % Massenanteil Kalk, 29 % Massenanteil expandierten Vermiculit und 2 % Massenanteil Polypropylenfaser mit einer Faserlänge von 6 mm.

### Ausführungsbeispiele der Erfindung

In einem Mischgerät wurde ein Gemisch von folgender Zusammensetzung vorbereitet: 29 % Massenanteil Portlandzement, 29 % Massenanteil Stuckgips, 11 % Massenanteil Kalk, 29 % Massenanteil expandierten Vermiculit und 2 % Massenanteil Polypropylenfaser mit einer Faserlänge von 6 mm. Nachdem man 10 kg von diesem Gemisch mit 16 I Wasser gemischt und eine klumpenfreie Konsistenz erzielt hatte, wurde der Mörtel mittels üblichen Putzerwerkzeugs in drei Schichten zu je 30 mm in einem Zeitabstand von 4 Stunden an Ziegelmauerwerk angebracht.

Die zum Trocknen nötige Zeit bei einer Temperatur von 20°C und einer Luftfeuchtigkeit von 55 % war ungefähr 24 Stunden.

Nachdem der Putz ausgetrocknet und gereift war, betrug die Wärmeleitfähigkeit der so gebildeten Schicht λ = 0,09 W/mK. Bei einer Dicke der Schicht von 10 cm beträgt also der Widerstand gegen die Wärmeübertragung R = 1,11 m²/K/W. Außer guten Wärmedämmfähigkeiten widersteht das Material dem Moder und besitzt gute Brandschutzeigenschaften. Im Vergleich mit den geläufigen Systemen auf der Basis der Mineralwolle und Polystyrol senkt es die Sanierungskosten. Mit Rücksicht auf ein niedriges spezifisches Gewicht und niedrige Produktionskosten ist der Einsatz des Materials im ganzen Bauwesen zweckmäßig.

Das Mörtelgemisch kann nach einer Hand- oder Maschinenbearbeitung an jeden Untergrund angebracht werden. Es bildet einen trockenen Anwurf mit einem niedrigen spezifischen Gewicht. Es kann ein- oder mehrschichtig aufgetragen werden. Der Anwurf widersteht der Witterung, dem Moder und den Bakterien, ist atoxisch und umweltfreundlich und besitzt gleichzeitig eine gute Schallisolierfähigkeit.

## Patentansprüche

1. Ein, Zement, Kalk, Gips und expandierte Mineralstoffe enthaltender Werktrockenmörtel, **dadurch gekennzeichnet, dass** er durch 26 bis 32 % Massenanteil Zement, 26 bis 32 % Massenanteil Gips, 9 bis 13 % Massenanteil Kalk, 26 bis 32 % Massenanteil expandierten Vermiculit und 1 bis 3 % Massenanteil Polypropylenfaser gebildet ist.

2. Mörtel nach Anspruch 1, **dadurch gekennzeichnet, dass** er die folgende Zusammensetzung hat: 29 % Massenanteil Portlandzement, 29 % Massenanteil Stuckgips, 11 % Massenanteil Kalk, 29 % Massenanteil expandierten Vermiculit und 2 % Massenanteil Polypropylenfaser mit einer Faserlänge von 6 mm.
